# EUROPÄISCHE PATENTSCHRIFT

(11) **EP 1 135 835 B1**
(45) Veröffentlichungstag und Bekanntmachung des Hinweises auf die Patenterteilung: **12.02.2003**
(21) Anmeldenummer: 99959322.1
(22) Anmeldetag: 22.11.1999
(51) Int. Cl.: H01R 39/38, H02K 5/14

(54) **HAMMERBÜRSTENHALTERUNG MIT KIPPSICHERUNG**
STABILIZED HAMMER BRUSH HOLDER
PORTE-BALAIS EN MARTEAU A PROTECTION ANTI-BASCULEMENT

(30) Priorität: 27.11.1998 EP 98122519
(43) Veröffentlichungstag der Anmeldung: 26.09.2001
(73) Patentinhaber: SIEMENS AKTIENGESELLSCHAFT, 80333 München (DE)
(72) Erfinder: DREXLMAIER, Thomas, D-97072 Würzburg (DE); GÖB, Werner, D-97273 Kürnach (DE)
(86) Internationale Anmeldenummer: EP9909077
(87) Internationale Veröffentlichungsnummer: WO00033429

(56) Entgegenhaltungen:
- EP-A- 0 043 460
- EP-A- 0 175 993
- EP-A- 0 791 988
- DE-A- 2 417 028

## Beschreibung

Die Erfindung bezieht sich auf eine Hammerbürstenhalterung mit Kippsicherung gemäß Patentanspruch 1.

Durch die DE 28 14 009 C3 bzw. EP 0 791 988 A1 sind Schwenklagerungen für Hammerbürstenhalter bekannt, bei denen die bürstenabgewandten Enden der Kunststoff-Hammerbürstenhalter mit eingeformten schalenartigen Lageraufnahmen in fertigungsund montagetechnisch einfacher Weise auf korrespondierende Schneiden-Lagerungen eines Motor-Statorteils, insbesondere eines Lagerbügels aufsteckbar und mittels in Ausnehmungen einhängbarer Bürstenandruckfedern im Betriebszustand mit ihren bürstenseitigen Enden an die Lamellenfläche eines Kommutators angedrückt werden; nach einer Ausgestaltung ist bereits eine Schwenklagerung mit in Schwenkachsrichtung jeweils endseitigen Einzelschwenklagern derart vorgesehen, daß der Hammerbürstenhalter durch zwischen den Einzelschwenklagern vorstehende Lagerbügel-Anschläge axial auch formschlüssig lagesicherbar ist.

Durch die DE 24 17 028 A1 ist eine Hammerbürstenhalterung mit Kippsicherung mit einer Schneidenlagerung, einem Lagerbügel, einem Sicherungszapfen und einer zusätzlichen axialen Sicherung bekannt.

Durch die EP 0 043 460 A ist weiterhin eine Hammbürstenhalterung bekannt, bei der eine Frontplatte und eine Endplatte zur axialen Fixierung der Hammerbürstenlagerung und zu deren Sicherung gegen ein radiales Verschieben bzw. Verkanten vorgesehen ist.

Gemäß Aufgabe vorliegender Erfindung soll bei Beibehaltung dieses fertigungs- und montagetechnisch vorteilhaften Aufbaus mit einfachen Mitteln eine Kippsicherung gegenüber, insbesondere beim Fertigungs- bzw. Transporthandling, möglichen äußeren Querkräften erreicht werden, aufgrund derer die Gefahr besteht, daß die Bürstenhalter quer zur Schwenkbewegung aus ihrer Schwenklagerung ausgehebelt oder in eine bleibende Kippstellung mit nur mit einer Kante auf der Lamellenfläche des Kommutators aufliegenden Bürste gebracht werden können.

Eine derartige Kippsicherung kann ausgehend von den eingangs als Stand der Technik beschriebenen Hammerbürstenhalterungen unter Beibehaltung des vorteilhaften Konstruktions- und Montageprinzips durch das erfindungsgemäße Zusammenwirken eines Sicherungs-Zapfens an dem Hammerbürstenhalter bzw. dem Motor-Statorteil einerseits und einer korrespondierenden Sicherungs-Ausnehmung an dem Motor-Statorteil bzw. an dem Hammerbürstenhalter sowie die beidseitig des Sicherungszapfens vorgesehenen Schneidenlagerungen mit formschlüssig lagesichernden, zungenartig vorstehenden axialen Anschlagsicherungen andererseits gemäß dem Anspruch 1 erreicht werden; vorteilhafte Ausgestaltungen der Erfindung sind jeweils Gegenstand der Unteransprüche.

Das Zusammenwirken von Sicherungs-Zapfen einerseits und Sicherungs-Ausnehmung andererseits ist dabei zweckmäßigerweise derart abgestimmt, daß einerseits bei gegenseitiger Betriebsstellung von Hammerbürstenhalter und aufnehmendem Motor-Statorteil eine für einen gegenseitigen Toleranzausgleich unvorteilhafte Positionierungs-Überdimensionierung durch entsprechende gegenseitige kraftschlüssige Berührung vermieden wird, jedoch andererseits bei Beginn einer Kippbewegung des Hammerbürstenhalters schon bei kleinem Kippwinkel durch Anschlag des Sicherungs-Zapfens an die Begrenzung der umschließenden Sicherungs-Ausnehmung eine weitere Kippbewegung gehindert und bei Wegfall der, insbesondere nur während des Einbaus oder Transports auftretenden, die Kippbewegung verursachenden Querkraft der Hammerbürstenhalter und damit die Bürsten in ihre normale Betriebsstellung, vorzugsweise unter dem Zug der Bürstenandruckfeder, rückstellbar sind.

Durch die DE 24 17 028 A1 ist ein Kommutatormotor mit einer Schwenkarm-Kippsicherung eines Hammerbürstenhalters derart bekannt, daß die Schwenkarme an ihren bürstenabgewandten Enden in gabelförmig auseinanderstrebende Schenkel münden, die eine Aufnahme für eine Schneidenlagerung an einem Lagerbügel bilden und von denen einer mit einem hakenförmigen Ende versehen ist, das in einen Durchbruch des Lagerbügels eintaucht. Das hakenförmige Ende der Erlängerung ist federelastisch ausgebildet und liegt vorgespannt an einer Kante des Durchbruchs an; die Breite des hakenförmigen Endes ist der Breite des Durchbruchs angepaßt, so daß ein seitliches Kippen des Schwenkarms aus seiner Betriebslage verhindert wird.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: die radiale Draufsicht auf einen Lagerbügel mit nur einem aufgesteckten Hammerbürstenhalter in normaler Betriebs-Schwenklage;
- FIG 2: die Anordnung gemäß FIG 1 mit zwei Hammerbürstenhaltern in einer durch die erfindungsgemäße Kippsicherung begrenzten Kippstellung;
- FIG 3: eine motorinnere axiale Draufsicht auf die Anordnung gemäß FIG 1 jedoch mit zwei Hammerbürstenhaltern;
- FIG 4: in vergrößerter Ausschnittsdarstellung aus FIG 1 eine herkömmliche Schwenklagerung ohne Kippsicherung;
- FIG 5-8: in vergrößerter Ausschnittsdarstellung aus FIG 1 Schwenklagerungen mit verschiedenen Ausgestaltungen einer erfindungsgemäßen Kippsicherung.

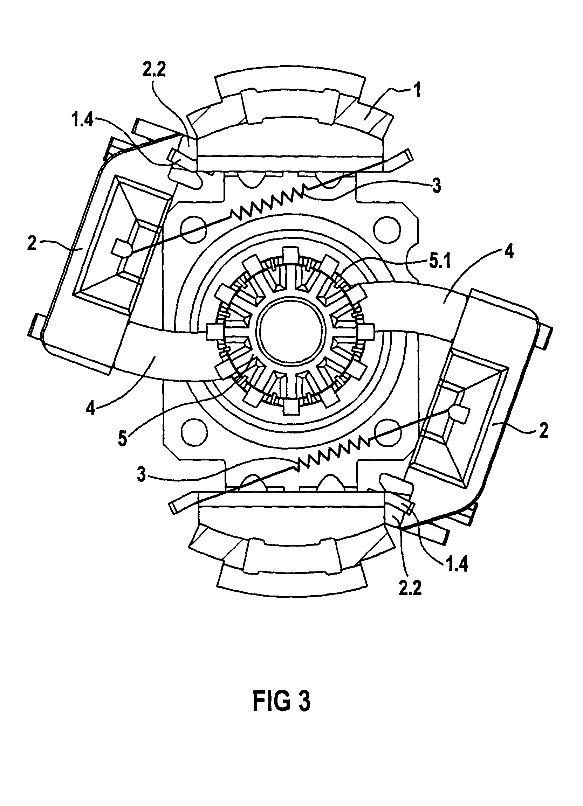

An einem Lagerbügel 1 eines Kommutatormotors sind - wie insbesondere aus FIG 3 ersichtlich - zwei einander radial gegenüberliegende Hammerbürstenhalter 2;2 in einer Schwenklagerung eingehängt und mittels je einer Bürstenandruckfeder 3;3 mit Bürsten 4;4 an ihren der Schwenklagerung abgewandten freien Enden gegen die Lamellenfläche 5.1 eines Kommutators 5 andrückbar.

Zur eigentlichen Schwenklagerung zwischen einem Hammerbürstenhalter 2 einerseits und der Lageraufnahme des Lagerbügels 1 andererseits im Sinne einer montagetechnisch einfachen zusammensteckbaren gegenseitigen Schwenklagerung sind am Lagerbügel 1 zwei axial hintereinanderliegende durch eine Sicherungs-Ausnehmung 1.1 getrennte seitliche Schneidenlagerungen 1.2 bzw.1.3 vorgesehen, auf welche jeweils ein Hammerbürstenhalter 2 mit einer schalenartigen Lageraufnahme 2.2 bzw.2.3 aufsteckbar und durch eine Bürstenandruckfeder 3 an die Lamellenfläche 5.1 andrückbar und dabei zumindest radial lagesicherbar ist.

Obwohl durch eine gewisse Schwenklagerungsreibung aufgrund eines Lagerungsandruckes der Bürstenandruckfeder 3 bereits auch eine zumindest kraftschlüssige axiale Lagesicherung des Hammerbürstenhalters 2 relativ zu dem Lagerbügel 1 gewährleistbar ist, sind formschlüssig lagesichernde, zungenartige vorstehende axiale Anschlagsicherungen 1.4 bzw.1.5 beidseitig außen zu den auf die Schneidenlagerungen 1.2 bzw.1.3 aufgesteckten schalenartigen Lageraufnahmen 2.2 bzw.2.3 vorgesehen.

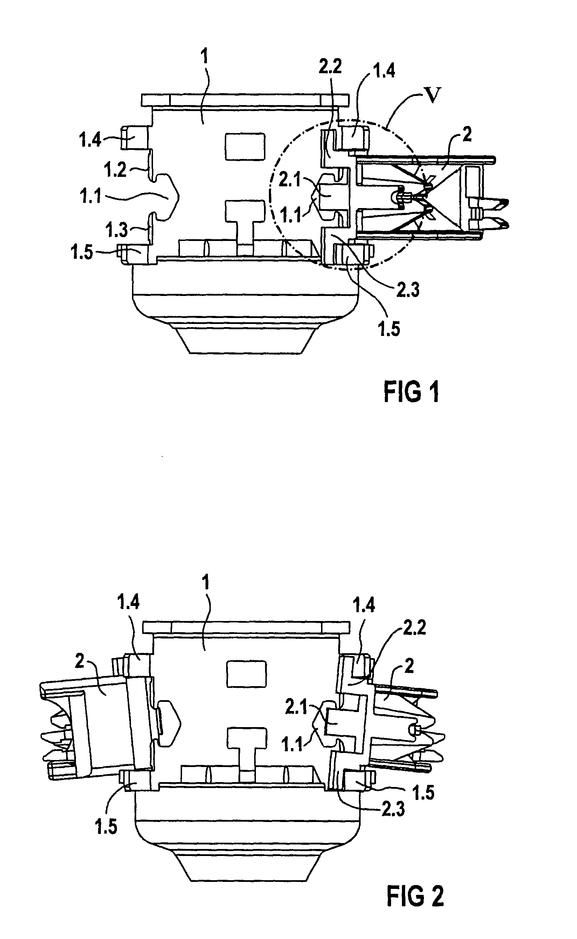

An dem Bürstenhalter 2 ist - gemäß FIG 1-3 bzw.5-7 - ein vorstehender Sicherungs-Zapfen 2.1 vorgesehen, der bei betriebsmäßiger gegenseitiger Schwenklagerung zwischen dem Hammerbürstenhalter 2 und dem Lagerbügel 1 in eine korrespondierende Sicherungs-Ausnehmung 1.1 des Lagerbügels 1 im Sinne einer Kippsicherung des Hammerbürstenhalters 2 entgegen einer im wesentlichen quer zur Schwenkbewegung gewickelten Kippkraft eingreift.

FIG 2 zeigt - ausgehend von einer betriebsmäßigen Normal-Schwenklagerung gemäß FIG 1 - eine leichte, durch Anschlag des Sicherungs-Zapfens 2.1 an die obere Wandung der Sicherungs-Ausnehmung 1.1 begrenzte Kippstellung des Hammerbürstenhalters 2, derart daß dieser nach Wegfall der - insbesondere bei Montage und Transport nur vorübergehend auftretenden - Kippkraft durch die Zugkraft der Bürstenandruckfeder 3 wieder in seine Normal-Schwenklagerung rückstellbar ist; ohne die erfindungsgemäße Kippsicherung bestände Gefahr, daß die Bürstenhalterung in eine solche Kippstellung gebracht werden könnte, daß Gefahr einer dauernden Verkantung zwischen der vom Hammerbürstenhalter 2 aufgenommenen Bürste 4 und der Lamellenfläche 5.1 des Kommutators 5 oder sogar einer totalen seitlichen Aushebelung des Hammerbürstenhalters 2 aus seiner Schwenklagerung bestände.

In vorteilhafter Weise kann bei der erfindungsgemäßen Kippsicherung die einfache Fertigungs- und Montagetechnologie der Steckmontage von Hammerbürstenhalter 2 und Lagerbügel 1 mit einhängbarer Bürstenandruckfeder 3 beibehalten werden; zweckmäßigerweise ist die Sicherungs-Ausnehmung 1.1 als Widerlager für das eine einzuhängende Ende der Bürstenandruckfeder 3 mitausgebildet bzw. mitbenutzt.

Der Sicherungs-Zapfen 2.1 sollte zwar im Sinne einer Verhinderung eines zu großen Kippwinkels des Hammerbürstenhalters 2 der Sicherungs-Ausnehmung 1.1 unter Vermeidung eines zu großen gegenseitigen Kraftschlusses angepaßt sein, jedoch sollte eine Überbestimmung im Sinne eines dann nicht möglichen gegenseitigen betriebsmäßigen Toleranzausgleiches der miteinander zusammenzubauenden Bauteile vermieden sein.

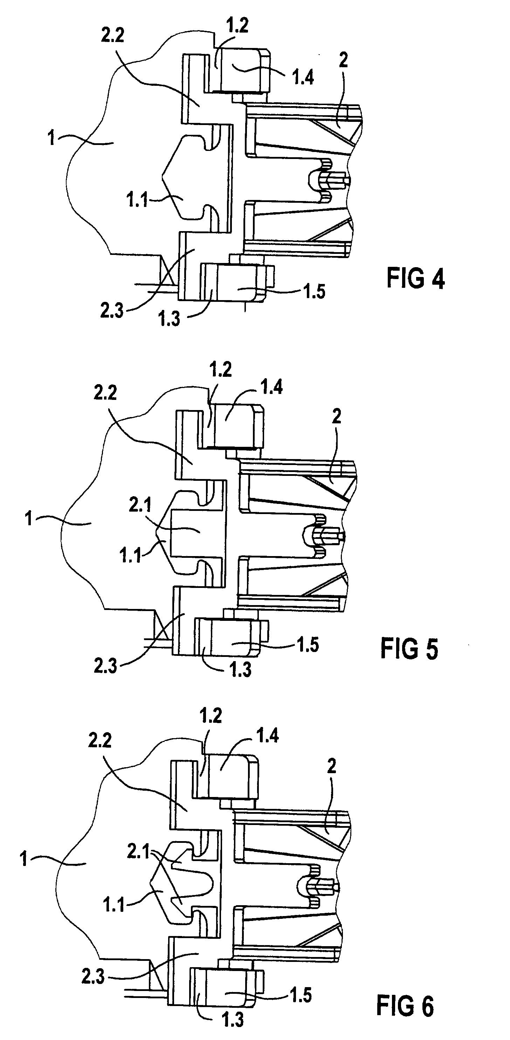

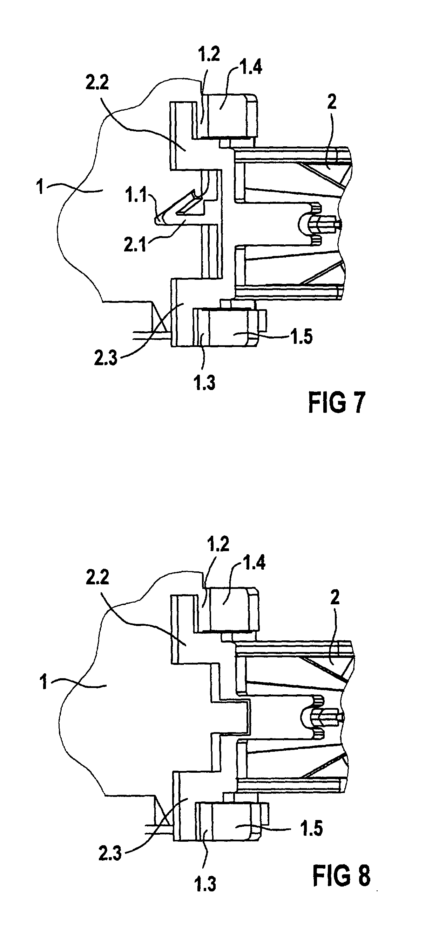

Die vergrößerten Einzeldarstellungen gemäß FIG 5 bis 7 zeigen ausgehend von einer bekannten Schwenklagerung ohne Kippsicherung gemäß FIG 4 einen betriebsmäßig kraftfreien Eingriff eines Sicherungs-Zapfens 2.1 am Hammerbürstenhalter 2 in eine Sicherungs-Ausnehmung 1.1 an einem Lagerbügel 1. FIG 8 zeigt die kinematische Umkehr mit Eingriff eines Sicherungs-Zapfens eines Lagerbügels 1 in eine Sicherungs-Ausnehmung des Hammerbürstenhalters 2; FIG 6;7 zeigen zwei Ausführungsbeispiele eines formschlüssigen, vorzugsweise federnd, verrastbaren Eingriffs eines Sicherungs-Zapfens 2.1 am Hammerbürstenhalter in eine Sicherungs-Ausnehmung 1.1 mit Rast-Hinterschnitt am Lagerbügel 1.

Die Sicherungsöffnung 1.1 bzw. die Schneidenlagerungen 1.2;1.3 bzw. die Anschlagsicherungen 1.4;1.5 sind in fertigungstechnisch vorteilhafter Weise als einstückige Stanzbiegeteile des metallenen Lagerbügels 1 ausgeführt; der Sicherungs-Zapfen 2.1 sowie die schalenartigen Lageraufnahmen 2.2;2.3 sind zweckmäßigerweise einstückige, an- bzw. eingeformte, insbesondere an- bzw. eingespritzte Bestandteile eines, insbesondere als Spritzgußteil hergestellten, Kunststoff-Bürstenhalters 2.

## Patentansprüche

1. Hammerbürstenhalterung mit Kippsicherung
- mit einer Schwenklagerung eines Hammerbürstenhalters (2) an einem Motor-Statorteil, insbesondere einem Lagerbügel (1);
- mit einem vorstehenden Sicherungs-Zapfen (2.1) an dem Hammerbürstenhalter bzw. an dem Motor-Statorteil, der bei deren gegenseitiger Betriebsstellung in eine korrespondierende Sicherungs-Ausnehmung (1.1) des Motor-Statorteils bzw. des Hammerbürstenhalters im Sinne einer Kippsicherung des Hammerbürstenhalters entgegen einer im wesentlichen quer zur Schwenkbewegung gerichteten Kippkraft eingreift;
- mit jeweils axial beidseitig zu dem Sicherungszapfen (2.1) einer schalenartigen Lageraufnahme (2.2;2.3) am bürstenabgewandten Bürstenhalterende bzw. an dem Motor-Statorteil, die schwenkbar auf zumindest eine korrespondierende Schneidenlagerung (1.2;1.3) des Motor-Statorteils bzw. des Hammerbürstenhalters aufsteckbar ist;
- mit einer formschlüssig lagesichernden, zungenartig vorstehenden axialen Anschlagsicherung (1.4;1.5) für jede der Schneidenlagerungen (1.2;1.3).

2. Hammerbürstenhalterung nach Anspruch 1
- mit einer, insbesondere einstückigen, Anformung des Sicherungszapfens (2.1) an den Hammerbürstenhalter (2).

3. Hammerbürstenhalterung nach Anspruch 2
- mit einem Kunststoff-Hammerbürstenhalter (2) und mit einstückig angeformtem, insbesondere angespritztem, Sicherungszapfen (2.1).

4. Hammerbürstenhalterung nach Anspruch 2 und/oder 3
- mit einer Anordnung der zu dem Sicherungs-Zapfen (2.1) korrespondierenden Sicherungs-Ausnehmung (1.1) in dem Motor-Statorteil, insbesondere als Ausstanz-Ausnehmung.

5. Hammerbürstenhalterung nach zumindest einem der Ansprüche 1-4
- mit einer Mitbenutzung der statorseitigen Sicherungs-Ausnehmung (1.1) als Widerlager für eine Bürstenandruckfeder (3).

6. Hammerbürstenhalterung nach zumindest einem der Ansprüche 1-5
- mit einer Anordnung der zumindest einen schalenartigen Lageraufnahme (2.2;2.3) als Teil des Hammerbürstenhalters (2);
- mit einer Anordnung der zumindest einen korrespondierenden Schneidenlagerung (1.2;1.3) als Teil des Motor-Statorteils, insbesondere des Lagerbügels (1).

7. Hammerbürstenhalterung nach zumindest einem der Ansprüche 1-6
- mit einer Ausbildung des Sicherungs-Zapfens (2.1) bzw. der korrespondierenden Sicherungs-Ausnehmung (1.1) im Sinne einer betriebsmäßig gewährleisteten Toleranzausgleichs-Bewegung zwischen der schalenförmigen Lageraufnahme (2.2;2.3) einerseits und der korrespondierenden Schneidenlagerung (1.2;1.3) andererseits.

8. Hammerbürstenhalterung nach zumindest einem der Ansprüche 1-7
- mit einer Ausbildung des Sicherungs-Zapfens (2.1) bzw. der korrespondierenden Sicherungs-Ausnehmung (1.1) im Sinne einer betriebsmäßig gegenseitig formschlüssigen, insbesondere verrastbaren Einsteckverbindung.

## Claims

1. Hammer brush holder with tilt prevention mechanism
- with a pivot bearing of a hammer brush holder (2) on a motor stator part, in particular a bearing bow (1);
- with a projecting securing pin (2.1) on the hammer brush holder or the motor stator part, which in their mutual operating position engages in a corresponding securing recess (1.1) of the motor stator part or the hammer brush holder as a tilt prevention mechanism of the hammer brush holder in response to a tilting force that is directed essentially transversely to the pivot motion;
- with cupped bearing receptacles (2.2;2.3) axially on either side of the securing pin (2.1) on an end of the brush holder facing away from the brush or on the motor stator part, the cupped bearing receptacles being pivotally pluggable onto at least one corresponding knife-edge bearing (1.2;1.3) of the motor stator part or the hammer brush holder;
- with a form-fitting, position-fixing, tongue-shaped projecting axial securing stop (1.4;1.5) for each of the knife-edge bearings (1.2;1.3).

2. Hammer brush holder according to claim 1
- with a securing pin (2.1) moulded in particular in a single piece onto the hammer brush holder (2).

3. Hammer brush holder according to claim 2
- with a plastic hammer brush holder (2) and a securing pin (2.1) moulded on, in particular injection-moulded on, as a single piece.

4. Hammer brush holder according to claim 2 and/or 3
- with an arrangement of the securing recess (1.1) corresponding to the securing pin (2.1) in the motor stator part, in particular as a punched recess.

5. Hammer brush holder according to at least one of claims 1-4
- with the securing recess (1.1) on the stator side also being used as a counter-support for a brush pressure spring (3).

6. Hammer brush holder according to at least one of claims 1-5
- with an arrangement of at least one cupped bearing receptacle (2.2;2.3) as part of the hammer brush holder (2);
- with an arrangement of at least one corresponding knife-edge bearing (1.2;1.3) as part of the motor stator part, in particular of the bearing bow (1).

7. Hammer brush holder according to at least one of claims 1-6
- with the securing pin (2.1) and the corresponding securing recess (1.1) formed so as to give a tolerance balance movement that is guaranteed in operation between the cupped bearing receptacle (2.2;2.3) on the one hand and the corresponding knife-edge bearing (1.2;1.3) on the other hand.

8. Hammer brush holder according to at least one of claims 1-7
- with the securing pin (2.1) and the corresponding securing recess (1.1) formed so as to give a mutually form-fitting, in particular lockable plug-in connection in operation.

## Revendications

1. Porte-balai en marteau à sécurité anti-basculement
- avec une fixation pivotante d'un porte-balai en marteau (2) sur un élément de stator de moteur, en particulier sur un étrier de montage (1) ;
- avec un axe de blocage (2.1) saillant sur le porte-balai en marteau ou l'élément de stator de moteur qui, dans la position de fonctionnement réciproque de ceux-ci, s'engage dans un évidement de blocage (1.1) correspondant de l'élément de stator de moteur ou du porte-balai en marteau aux fins de réaliser une sécurité anti-basculement du porte-balai en marteau à l'encontre d'une force de basculement dirigée pour l'essentiel transversalement au mouvement de pivotement ;
- avec un logement (2.2 ; 2.3) en forme de coque disposé axialement de part et d'autre de l'axe de blocage (2.1), à l'extrémité du porte-balai éloignée du balai ou sur l'élément de stator de moteur, lequel logement peut être enfiché de manière pivotante sur au moins un support à couteau (1.2 ; 1.3) correspondant de l'élément de stator de moteur ou du porte-balai en marteau ;
- avec un élément de butée (1.4 ; 1.5) en forme de languette, faisant saillie dans la direction axiale et assurant un blocage en position par complémentarité de formes pour chacun des supports à couteau (1.2 ; 1.3).

2. Porte-balai en marteau selon la revendication 1,
- avec un moulage, en particulier d'une seule pièce, de l'axe de blocage (2.1) sur le porte-balai en marteau (2).

3. Porte-balai en marteau selon la revendication 2,
- avec un porte-balai en marteau (2) en matière plastique et avec un axe de blocage (2.1) moulé d'une pièce, en particulier par injection.

4. Support de porte-balai en marteau selon la revendication 2 et/ou 3,
- avec un agencement de l'évidement de blocage (1.1), correspondant à l'axe de montage (2.1), dans l'élément de stator de moteur, en particulier sous forme d'évidement découpé.

5. Porte-balai en marteau selon au moins une des revendications 1 à 4,
- avec une utilisation conjointe de l'évidement de blocage (1.1) côté stator comme butée pour un ressort de pression de balai (3).

6. Porte-balai en marteau selon au moins une des revendications 1 à 5,
- avec un agencement du logement (2.2 ; 2.3) en forme de coque, au nombre d'au moins un, comme partie du porte-balai en marteau (2) ;
- avec un agencement du support à couteau (1.2 ; 1.3) correspondant, au nombre d'au moins un, comme partie de l'élément de stator de moteur, en particulier de l'étrier de montage (1).

7. Porte-balai en marteau selon au moins une des revendications 1 à 6,
- avec une réalisation de l'axe de blocage (2.1) ou de l'évidement de blocage (1.1) correspondant, au sens d'un mouvement, garanti en fonctionnement, de compensation de tolérance entre le logement (2.2 ; 2.3) en forme de coque d'une part, et le support à couteau (1.2 ; 1.3) correspondant d'autre part.

8. Porte-balai selon au moins une des revendications 1 à 7,
- avec une réalisation de l'axe de blocage (2.1) ou de l'évidement de blocage (1.1) correspondant, au sens d'un assemblage à enfichage, mutuel en fonctionnement, par complémentarité de formes, en particulier à enclenchement.
